# FASCICULE DE BREVET EUROPEEN

(11) **EP 3 359 405 B1**
(45) Date de publication et mention de la délivrance du brevet: **04.09.2019**
(21) Numéro de dépôt: 16790658.5
(22) Date de dépôt: 04.10.2016
(51) Int. Cl.: B60K 1/04

(54) **AGENCEMENT DE SUPPORT DE BATTERIE POUR VÉHICULE HYBRIDE**
BATTERIEHALTERUNGSANORDNUNG FÜR HYBRIDFAHRZEUG
BATTERY SUPPORT ARRANGEMENT FOR HYBRID VEHICLE

(30) Priorité: 05.10.2015 FR 1559463
(43) Date de publication de la demande: 15.08.2018
(73) Titulaire: Renault S.A.S., 92100 Boulogne-Billancourt (FR)
(72) Inventeur: VINIAL, Christophe, 91220 Le Plessis Pate (FR)
(86) Numéro de dépôt international: PCT/FR2016/052542
(87) Numéro de publication internationale: WO 2017/060608

(56) Documents cités:
- EP-A1- 2 241 468
- EP-A1- 2 767 428
- US-A1- 2012 318 591

## Description

La présente invention concerne un agencement de support d'une batterie d'alimentation d'une machine électrique embarquée dans un véhicule automobile hybride.

On connaît certains véhicules de type véhicule hybride (véhicules dits HEV « Hybrid Electric Véhiculé » ou PHEV « Plug-in Hybrid Electric Vehicle » en terminologie anglo-saxonne), qui comprennent un petit dispositif électrique, désigné par l'acronyme anglais « SED » (pour « Small Electric Device »).

Un tel petit dispositif électrique comprend une machine électrique embarquée dans le véhicule, qui peut réaliser une ou plusieurs des fonctions suivantes telle que apporter une puissance et un couple d'assistance au moteur thermique du véhicule, notamment dans les phases de démarrage, accélération et roulage, généralement à bas régime et/ou faible vitesse, ou encore apporter l'énergie nécessaire au redémarrage du moteur thermique après un arrêt temporaire (fonction appelée « stop and start » en terminologie anglo-saxonne).

On connaît des véhicules où le petit dispositif électrique est fixé dans une région en arrière du dossier de la banquette arrière du véhicule (rang 2), par exemple sur une partie avant du plancher arrière de la structure de caisse. Aussi, un tel petit dispositif électrique est alimenté en électricité par une batterie d'alimentation, typiquement une batterie 48 volts. Un volume doit donc être réservé pour l'intégration de la batterie en partie arrière du véhicule.

Un agencement de support d'une batterie selon le préambule de la revendication 1 est connu du document EP 2 241 468 A1.

Il existe donc un besoin pour un agencement de support de batterie au niveau de la partie arrière du véhicule, qui soit simple à monter et facilite l'implantation de la batterie, sans perturber l'intégration des multiples fonctions liées aux spécificités du petit dispositif électrique implanté.

Ce but est atteint grâce à un agencement de support d'une batterie d'alimentation d'une machine électrique embarquée dans un véhicule automobile hybride comportant un plancher arrière de caisse muni d'un logement concave de réception d'une roue de secours, l'agencement comprenant un élément de support allongé apte à s'étendre transversalement audit plancher arrière de caisse en surplombant ledit logement concave de réception de roue de secours, ledit élément de support comportant une traverse longitudinale à l'aplomb de laquelle sont disposés deux bras de maintien opposés aptes à faire saillie vers l'intérieur dudit logement et définissant entre eux une zone de réception de ladite batterie à l'intérieur dudit logement.

Grâce à cet agencement, la batterie se trouve intégrée dans ledit logement en lieu et place de la roue de secours du véhicule, ce qui permet de ne pas pénaliser le volume utile du coffre du véhicule.

Avantageusement, ladite batterie, en position dans ladite zone de réception à l'intérieur dudit logement concave, affleure sensiblement ledit plancher arrière de caisse.

De préférence, lesdits bras de maintien font saillie à l'intérieur dudit logement sensiblement à proximité d'une paroi latérale cylindrique délimitant ledit logement concave.

Avantageusement, ledit agencement comprend une plaque rigide de protection fixée entre les deux bras de maintien de sorte à délimiter transversalement ladite zone de réception de ladite batterie à l'intérieur dudit logement concave.

Avantageusement, ledit élément de support allongé comporte des points de fixation sur ledit plancher arrière de caisse, lesdits points de fixation étant agencés sur des parties latérales dudit élément de support disposées aux extrémités respectives dudit élément de support.

De préférence, lesdites parties latérales dudit élément de support allongé comprennent des moyens de positionnement dudit élément de support allongé relativement audit plancher arrière de caisse, notamment relativement à un plan longitudinal transversal dudit plancher arrière de caisse.

Avantageusement, lesdits moyens de positionnement comprennent au moins un pion de positionnement s'étendant dans une direction sensiblement normale au plan desdites parties latérales dudit élément de support allongé et apte à traverser un orifice correspondant ménagé sur ledit plancher arrière de caisse.

De préférence, ledit élément de support allongé comprend des poignées de préhension situées de part et d'autre de ladite zone de réception de batterie suivant l'axe longitudinal de l'élément de support et adaptées pour coopérer avec un moyen d'assistance de montage pour la manutention et la mise en place dudit élément de support sur ledit plancher arrière de caisse.

Avantageusement, l'élément de support allongé comprend des moyens de support d'un groupe moto-ventilateur à l'intérieur du logement concave de réception de roue de secours.

De préférence, lesdits moyens de support du groupe moto-ventilateur comprennent un flasque support apte à venir être fixé à l'un desdits bras de maintien, à l'opposé de ladite zone de réception de batterie par rapport audit bras de maintien.

D'autres particularités et avantages de l'invention ressortiront à la lecture de la description faite ci-après d'un mode de réalisation particulier de l'invention, donné à titre indicatif mais non limitatif.

Dans la présente description, les termes avant, arrière, font référence aux directions avant et arrière du véhicule. Les axes X, Y, Z, correspondent respectivement à l'axe longitudinal (d'avant en arrière), transversal (orienté vers la droite) et vertical (orienté vers le haut) du véhicule.

Dans le présent texte, le terme « sensiblement » indique qu'un léger écart par rapport à une position ou orientation nominale déterminée est admis sans sortir du cadre de l'invention. Par exemple « sensiblement vertical » indique qu'une inclinaison de l'ordre de 10° par rapport à une orientation strictement verticale est admise dans le cadre de l'invention.

La description porte sur un agencement de support dans un véhicule automobile pour une batterie, destinée à l'alimentation d'un petit dispositif électrique implanté dans le véhicule et dédié à l'assistance du moteur thermique. Est décrite ci-après une structure de caisse arrière du véhicule automobile, comprenant deux bordures latérales ou longerons s'étendant longitudinalement entre lesquels on peut venir fixer une plaque s'étendant dans un plan sensiblement longitudinal transversal et formant ainsi un plancher arrière de caisse. Le plancher arrière de caisse du véhicule est en outre formé d'un logement concave constituant un bac de réception de roue de secours. Le logement concave, en forme de cuvette, comprend une paroi latérale cylindrique et une paroi de fond. La paroi de fond du logement concave formant bac de réception de roue de secours et la plaque du plancher arrière de caisse sont inclues dans des plans respectifs différents et normaux à l'axe Z.

Conformément à l'invention, l'agencement de support pour la batterie comprend un élément de support allongé, s'étendant transversalement au plancher arrière de caisse, en surplombant le logement concave, et destiné à supporter la batterie dans une position dans laquelle cette dernière est placée à l'intérieur du logement concave, en lieu et place de la roue de secours. L'élément de support est ainsi positionné immédiatement à l'avant et au-dessus du logement concave de réception de roue de secours. L'élément de support est préférentiellement constitué de deux traverses longitudinales parallèles s'étendant sur le plancher arrière de caisse entre les deux longerons, respectivement une traverse longitudinale avant située immédiatement à l'avant du logement concave et une traverse longitudinale arrière surplombant ledit logement, et reliées entre elles par des montants transversaux en particulier au niveau de leurs extrémités respectives, de sorte que l'élément de support allongé présente globalement une forme de quadrilatère. Les traverses longitudinales et les montants transversaux formant l'élément de support allongé sont par exemple assemblés par soudage. Ce quadrilatère est positionné transversalement sur le plancher arrière de caisse de sorte à surplomber le logement concave, sensiblement à l'avant de celui-ci.

L'élément de support comporte par ailleurs des parties latérales opposées, constituées par exemple de pièces de tôlerie formant des appuis plans, assemblées par exemple par soudage aux extrémités respectives de l'élément de support, et destinées à assurer la fixation de l'élément de support sur le plancher arrière de caisse. Ces parties latérales de l'élément de support sont pourvues de points de fixation destinés à être fixés au plancher arrière de caisse, de part et d'autre du logement concave, de façon à permettre la fixation de l'élément de support directement sur le plancher arrière de caisse. Selon l'exemple de réalisation, on prévoit deux points de fixation répartis sur une première partie latérale de l'élément de support et trois points de fixation répartis sur l'autre partie latérale, située à l'opposé de la première partie latérale. Ces points de fixation agencés au niveau des parties latérales de l'élément de support autorisent une fixation suivant l'axe vertical de l'élément de support au plancher arrière de caisse, par exemple au moyen de vis de fixation coopérant avec des structures de fixation correspondantes agencées sur le plancher arrière de caisse. Les points de fixation agencés au niveau des parties latérales de l'élément de support sont répartis de manière à permettre la fixation sur et/ou à proximité immédiate des bordures latérales du plancher arrière de caisse.

Les parties latérales de l'élément de support comprennent en outre des moyens de positionnement destinés à permettre de positionner l'élément de support, relativement au plancher arrière de caisse et notamment pour permettre son positionnement relativement au plan longitudinal transversal du plancher arrière de caisse, de sorte à venir surplomber le logement concave et ainsi permettre, comme il sera expliqué par la suite, de supporter la batterie dans une position où elle est intégrée à l'intérieur du logement concave. Selon l'exemple de réalisation, ces moyens de positionnement comprennent un pion de positionnement respectivement agencé sur chacune des deux parties latérales opposées. Ces pions de positionnement s'étendent dans une direction sensiblement normale au plan des parties latérales de l'élément de support (sensiblement suivant l'axe vertical) et sont destinés à traverser un orifice correspondant ménagé sur le plancher arrière de caisse lorsque l'élément de support est fixé au plancher arrière de caisse.

Afin de supporter la batterie, la traverse longitudinale de l'élément de support est pourvue de deux bras de maintien opposés, disposés à l'aplomb de la traverse longitudinale, de sorte à venir faire saillie vers l'intérieur du logement concave. Ces deux bras de maintien sont distants l'un de l'autre suivant la direction transversale Y et définissent ainsi entre eux une zone de réception de la batterie à l'intérieur du logement concave. Les deux bras de maintien sont agencés au niveau de la traverse longitudinale de sorte à faire saillie vers le bas, de façon sensiblement verticale, à l'intérieur du logement concave sensiblement à proximité de la paroi latérale cylindrique délimitant le logement concave. Ils sont préférentiellement disposés sensiblement dans le prolongement d'un montant transversal reliant entre elles les deux traverses longitudinales. Les deux bras de maintien comprennent en outre des points de fixation de la batterie, destinés à fixer la batterie à l'intérieur du logement concave lorsqu'elle est montée dans celui-ci. Ces points de fixation agencés au niveau des bras de maintien permettent une fixation de la batterie aux bras de maintien suivant un axe horizontal, préférentiellement suivant la direction longitudinale du véhicule, par exemple au moyen de vis de fixation coopérant avec des structures de fixation correspondantes agencées au niveau de la batterie. Lorsque la batterie est ainsi fixée dans la zone de réception de batterie à l'intérieur dudit logement concave, elle affleure sensiblement le plancher arrière de caisse.

L'élément de support intègre également une plaque rigide de protection, prévue pour être montée en arrière de la batterie entre les deux bras de maintien, de sorte à s'étendre transversalement dans le logement concave, lorsque l'élément de support est fixé sur le plancher arrière de caisse. Avantageusement, les points de fixation de la batterie sur les bras de maintien peuvent être utilisés pour fixer la plaque rigide de protection aux bras de maintien. La zone de réception de la batterie, qui s'étend entre les deux bras de maintien, est ainsi délimitée transversalement à l'intérieur du logement concave par la plaque rigide de protection.

On prévoit en outre, au niveau de chacun des bras de maintien de la batterie, un moyen de renfort, s'étendant à l'opposé de la plaque rigide de protection par rapport aux bras de maintien. Il se présente par exemple sous la forme d'une pièce de tôle en forme d'équerre, fixée par exemple par soudage, entre le bras de maintien et le montant transversal correspondant. Les moyens de renfort permettent ainsi de de renforcer la tenue mécanique des bras de maintien.

Suivant un mode de réalisation de l'invention, l'élément de support est conçu pour intégrer d'autres fonctions que celle visant à l'implantation et au maintien de la batterie à l'intérieur du logement de réception de roue de secours du véhicule.

En particulier, suivant l'exemple de réalisation, l'élément de support comprend des moyens de support d'un groupe moto-ventilateur à l'intérieur du logement concave de réception de roue de secours. Un tel groupe moto-ventilateur est en effet nécessaire au refroidissement de la batterie. Pour ce faire, la circulation d'air nécessaire au refroidissement de la batterie est assurée par l'intermédiaire d'un conduit d'aspiration permettant d'aspirer l'air dans l'habitacle du véhicule, l'air cheminant ensuite à travers la batterie pour la refroidir, puis circule au travers d'un conduit jusqu'à une pompe aspirante, avant de ressortir par un conduit d'extraction disposé en aval de la pompe. Les moyens de support du groupe moto-ventilateur sur l'élément de support sont plus particulièrement conçus pour permettre de fixer la pompe aspirante du groupe moto-ventilateur à l'intérieur du logement de réception de roue de secours lorsque l'élément de support est fixé sur le plancher arrière de caisse. Les moyens de support se présentent par exemple sous la forme d'un flasque support s'étendant dans un plan longitudinal vertical à l'opposé de la zone de réception de batterie par rapport à la traverse longitudinale. Le flasque support est fixé, par exemple par l'intermédiaire de vis de fixation, à l'un des bras de maintien et à la traverse longitudinale. Il est en outre pourvu de moyens de fixation permettant de fixer la pompe aspirante du groupe moto-ventilateur sur le flasque support de l'élément de support. Les moyens de fixation se présentent par exemple sous la forme d'ergots de fixation s'étendant sensiblement dans une direction normale au plan du flasque support et sont destinés à être insérés dans des ouvertures de montage correspondantes de la pompe lorsque cette dernière est montée sur le flasque support.

Enfin, selon l'exemple de réalisation, l'élément de support comprend des poignées de préhension, agencées préférentiellement deux par deux en vis-à-vis sur les traverses longitudinales de l'élément de support. Les poignées sont préférentiellement situées de part et d'autre de la zone de réception de batterie suivant l'axe longitudinal de l'élément de support allongé. Chacune de ces poignées de préhension est par exemple constituée par un fil cintré formant un arceau, fixé à chacune de ses extrémités sur une traverse longitudinale de l'élément de support. Les poignées de préhension ainsi fixées à l'élément de support sont adaptées pour coopérer avec un moyen d'assistance de montage pour la manutention et la mise en place de l'élément de support sur le plancher arrière de caisse. En particulier, un outil ayant la forme d'une fourche à deux longerons porteurs horizontaux destinés à coopérer avec les poignées de préhension, peut être utilisé pour manutentionner l'élément de support, notamment pour soulever et installer ou déposer l'élément de support.

L'intégration « tout en 1 » à l'élément de support des diverses fonctions décrites ci-dessus permet de réaliser une préparation montage de l'ensemble en bord de chaine de montage, avant mise en place dans le véhicule. Cela facilite l'opération de montage et d'implantation de ces fonctions au sein du véhicule, et permet de conserver une bonne ergonomie en préparation en bord de chaine, plutôt que de multiples interventions à l'intérieur du véhicule.

## Revendications

1. Agencement de support d'une batterie d'alimentation d'une machine électrique embarquée dans un véhicule automobile hybride comportant un plancher arrière de caisse muni d'un logement concave de réception d'une roue de secours, l'agencement comprenant un élément de support allongé apte à s'étendre transversalement audit plancher arrière de caisse en surplombant ledit logement concave de réception de roue de secours, ledit élément de support comportant une traverse longitudinale, **caractérisé en ce que** deux bras de maintien opposés sont disposés à l'aplomb de la traverse longitudinale, les deux bras de maintien étant aptes à faire saillie vers l'intérieur dudit logement concave et définissant entre eux une zone de réception de ladite batterie à l'intérieur dudit logement.

2. Agencement selon la revendication 1, **caractérisé en ce que** ladite batterie, en position dans ladite zone de réception à l'intérieur dudit logement concave, affleure sensiblement ledit plancher arrière de caisse.

3. Agencement selon l'une quelconque des revendications 1 ou 2, **caractérisé en ce que** lesdits bras de maintien font saillie à l'intérieur dudit logement sensiblement à proximité d'une paroi latérale cylindrique délimitant ledit logement concave.

4. Agencement selon l'une quelconque des revendications précédentes, **caractérisé en ce qu'**il comprend une plaque rigide de protection fixée entre les deux bras de maintien de sorte à délimiter transversalement ladite zone de réception de ladite batterie à l'intérieur dudit logement concave.

5. Agencement selon l'une quelconque des revendications précédentes, **caractérisé en ce que** ledit élément de support allongé comporte des points de fixation sur ledit plancher arrière de caisse, lesdits points de fixation étant agencés sur des parties latérales dudit élément de support disposées aux extrémités respectives dudit élément de support.

6. Agencement selon la revendication 5, **caractérisé en ce que** lesdites parties latérales dudit élément de support allongé comprennent des moyens de positionnement dudit élément de support allongé relativement audit plancher arrière de caisse, notamment relativement à un plan longitudinal transversal dudit plancher arrière de caisse.

7. Agencement selon la revendication 6, **caractérisé en ce que** lesdits moyens de positionnement comprennent au moins un pion de positionnement s'étendant dans une direction sensiblement normale au plan desdites parties latérales dudit élément de support allongé et apte à traverser un orifice correspondant ménagé sur ledit plancher arrière de caisse.

8. Agencement selon l'une quelconque des revendications précédentes, **caractérisé en ce que** ledit élément de support allongé comprend des poignées de préhension situées de part et d'autre de ladite zone de réception de batterie suivant l'axe longitudinal de l'élément de support et adaptées pour coopérer avec un moyen d'assistance de montage pour la manutention et la mise en place dudit élément de support sur ledit plancher arrière de caisse.

9. Agencement selon l'une quelconque des revendications précédentes, **caractérisé en ce que** l'élément de support allongé comprend des moyens de support d'un groupe moto-ventilateur à l'intérieur du logement concave de réception de roue de secours.

10. Agencement selon la revendication 9, **caractérisé en ce que** lesdits moyens de support du groupe moto-ventilateur comprennent un flasque support apte à venir être fixé à l'un desdits bras de maintien, à l'opposé de ladite zone de réception de batterie par rapport audit bras de maintien.

## Patentansprüche

1. Halterungsanordnung für eine Batterie zur Versorgung einer elektrischen Maschine, die in einem Hybrid-Automobilfahrzeug eingebaut ist, umfassend einen hinteren Gehäuseboden, der mit einer konkaven Aufnahme zum Aufnehmen eines Reserverads versehen ist, wobei die Halterung ein längliches Halteelement umfasst, das geeignet ist, sich in Querrichtung zu dem hinteren Gehäuseboden zu erstrecken, indem es über die konkave Aufnahme zum Aufnehmen des Reserverads hinausragt, wobei das Halteelement eine Längstraverse umfasst,
**dadurch gekennzeichnet, dass** zwei gegenüberliegende Stützarme senkrecht zur Längstraverse angeordnet sind, wobei die beiden Stützarme geeignet sind, zum Inneren der konkaven Aufnahme vorzustehen, und dazwischen eine Zone zum Aufnehmen der Batterie im Inneren der Aufnahme definieren.

2. Anordnung nach Anspruch 1, **dadurch gekennzeichnet, dass** die Batterie, in der Position in der Zone zum Aufnehmen im Inneren der konkaven Aufnahme, im Wesentlichen mit dem hinteren Gehäuseboden fluchtet.

3. Anordnung nach einem der Ansprüche 1 oder 2, **dadurch gekennzeichnet, dass** die Stützarme im Inneren der Aufnahme im Wesentlichen in der Nähe einer zylindrischen Seitenwand vorstehen, welche die konkave Aufnahme begrenzt.

4. Anordnung nach einem der vorhergehenden Ansprüche, **dadurch gekennzeichnet, dass** diese eine starre Schutzplatte umfasst, die zwischen den beiden Stützarmen befestigt ist, um in Querrichtung die Zone zum Aufnehmen der Batterie im Inneren der konkaven Aufnahme zu begrenzen.

5. Anordnung nach einem der vorhergehenden Ansprüche, **dadurch gekennzeichnet, dass** das längliche Halteelement Befestigungspunkte auf dem hinteren Gehäuseboden umfasst, wobei die Befestigungspunkte auf Seitenteilen des Halteelements eingerichtet sind, die an den jeweiligen Enden des Halteelements angeordnet sind.

6. Anordnung nach Anspruch 5, **dadurch gekennzeichnet, dass** die Seitenteile des länglichen Halteelements Mittel zur Positionierung des länglichen Halteelements relativ zum hinteren Gehäuseboden umfassen, insbesondere relativ zu einer querverlaufenden Längsebene des hinteren Gehäusebodens.

7. Anordnung nach Anspruch 6, **dadurch gekennzeichnet, dass** die Mittel zur Positionierung mindestens einen Stift zur Positionierung umfassen, der sich in einer Richtung im Wesentlichen normal zur Ebene der Seitenteile des länglichen Halteelements erstreckt, und geeignet ist, eine entsprechende Öffnung zur durchqueren, die in dem hinteren Gehäuseboden eingerichtet ist.

8. Anordnung nach einem der vorhergehenden Ansprüche, **dadurch gekennzeichnet, dass** das längliche Halteelement Handgriffe umfasst, die auf beiden Seiten der Zone zum Aufnehmen der Batterie in einer Längsachse des Halteelements angeordnet sind, und geeignet sind, mit einem Mittel zur Unterstützung der Montage zum Halten und Platzieren des Halteelements an dem hinteren Gehäuseboden zusammenzuwirken.

9. Anordnung nach einem der vorhergehenden Ansprüche, **dadurch gekennzeichnet, dass** das längliche Halteelement Mittel zum Halten eines Motorlüftersatzes im Inneren der konkaven Aufnahme zum Aufnehmen des Reserverads umfasst.

10. Anordnung nach Anspruch 9, **dadurch gekennzeichnet, dass** die Mittel zum Halten des Motorlüftersatzes einen Stützflansch umfassen, der geeignet ist, an einem der Stützarme gegenüber der Zone zum Aufnehmen der Batterie in Bezug auf den Stützarm befestigt zu werden.

## Claims

1. Power supply battery support arrangement of an electrical machine onboard a hybrid motor vehicle including a bodyshell rear floor including a concave housing to receive a spare wheel, the arrangement comprising an elongate support element adapted to extend transversely to said bodyshell rear floor over said spare wheel receiving concave housing, said support element including a longitudinal crossmember, **characterized in that** two opposite retaining arms are disposed in vertical alignment with the longitudinal crossmember, the two retaining arms being adapted to project toward the interior of said concave housing and defining between them a zone to receive said battery inside said housing.

2. Arrangement according to Claim 1, **characterized in that**, in position in said receiving zone inside said concave housing, said battery is substantially flush with said bodyshell rear floor.

3. Arrangement according to either one of Claims 1 and 2, **characterized in that** said retaining arms project inside said housing substantially in the vicinity of a cylindrical lateral wall delimiting said concave housing.

4. Arrangement according to any one of the preceding claims, **characterized in that** it comprises a rigid protection plate fixed between the two retaining arms so as to delimit transversely said zone receiving said battery inside said concave housing.

5. Arrangement according to any one of the preceding claims, **characterized in that** said elongate support element includes points for fixing it to said bodyshell rear floor, said fixing points being arranged on lateral parts of said support element disposed at the respective ends of said support element.

6. Arrangement according to Claim 5, **characterized in that** said lateral parts of said elongate support element comprise means for positioning said elongate support element relative to said bodyshell rear floor, in particular relative to a transverse longitudinal plane of said bodyshell rear floor.

7. Arrangement according to Claim 6, **characterized in that** said positioning means comprise at least one positioning pin extending in a direction substantially normal to the plane of said lateral parts of said elongate support element and adapted to pass through a corresponding orifice in said bodyshell rear floor.

8. Arrangement according to any one of the preceding claims, **characterized in that** said elongate support element comprises handles for holding it situated on either side of said battery receiving zone along the longitudinal axis of the support element and adapted to cooperate with a mounting assistance means for handling and placing said support element on said bodyshell rear floor.

9. Arrangement according to any one of the preceding claims, **characterized in that** the elongate support element comprises means for supporting a motorized fan unit inside the spare wheel receiving concave housing.

10. Arrangement according to Claim 9, **characterized in that** said motorized fan unit support means comprise a support flange adapted to be fixed to one of said retaining arms opposite said battery receiving zone relative to said retaining arm.
